# EUROPEAN PATENT APPLICATION

(11) **EP 4 071 972 A1**
(43) Date of publication of application: **12.10.2022**
(21) Application number: 20946112.8
(22) Date of filing: 09.12.2020
(51) Int. Cl.: H02K 1/14, H02K 3/28

(54) **STATOR, MOTOR, FLUID PUMP, AND VEHICLE**

(30) Priority: 24.07.2020 CN 202010724067
(71) Applicant: Anhui Welling Auto Parts Co., Ltd., Hefei, Anhui 230031 (CN); Guangdong Welling Auto Parts Co., Ltd., Foshan, Guangdong 528311 (CN)
(72) Inventor: WAN, Jia, Hefei, Anhui 230031 (CN); GONG, Jie, Hefei, Anhui 230031 (CN); GE, Xiao, Hefei, Anhui 230031 (CN)
(74) Representative: RGTH
(86) International application number: PCT/CN2020/135039
(87) International publication number: WO 2022/016780

(57) **Abstract**

Provided are a stator (1), a motor having the stator (1), a fluid pump having the motor, and a vehicle including the fluid pump. The stator (1) includes: a stator core (11), an upper insulating frame (12), a lower insulating frame (13), a plurality of connection terminals (16), and a plurality of windings (14). The upper insulating frame (12) includes an upper plug-in portion (121) and an upper protruding portion (122). The outer peripheral wall of the upper protruding portion (122) is provided with a plurality of terminal slots (1221). An upper end face of the upper protruding portion (122) has a plurality of notches (1222) extending downward with different depths. A plurality of protrusions (1223) is arranged on the outer peripheral wall of the upper protruding portion (122). The plurality of protrusions (1223) is arranged in multiple layers spaced apart along an axial direction of the upper insulating frame (12). A wiring space is formed between two adjacent layers. The protrusions (1223) in the same layer are distributed at intervals along circumferential direction of the upper insulation frame (12). The connecting wires (15) of the plurality of windings (14) are drawn out from the notches (1222) and arranged in the wiring space along the circumferential direction of the upper insulating frame (12). The plurality of connection terminals (16) is inserted into the plurality of terminal slots (1221). For the stator (1) according to the present disclosure, the connection terminal is easy to install, and the overlapping and crossing of the windings is avoided. Thus, the performance of the motor is improved.

## Description

### CROSS-REFERENCE TO RELATED APPLICATIONS

This application claims priority to and rights of Chinese Patent Application No. 202010724067.5, filed on July 24, 2020, which is incorporated herein by reference in its entirety.

### FIELD

Embodiments of the present disclosure relate to the technical field of motors, and particularly, to a stator, a motor having the stator, a fluid pump having the motor, and a vehicle including the fluid pump.

### BACKGROUND

For fluid pumps used in vehicles, such as electronic water pumps or electronic oil pumps, the permanent magnet motor has a large air gap and a weak effective permanent magnet magnetic field. For the fact that the current cannot be increased indefinitely and the heating of the motor is limited, the only way to reach the lift and efficiency required by the electronic water pump is to increase the number of coils. The wiring, when being wound by a winding machine, is likely to overlap and cross due to a large number of coils, resulting in a short circuit between turns.

### SUMMARY

The present disclosure aims to solve one of the technical problems in the related art at least to a certain extent.

To this end, the embodiments of the present disclosure provide a stator with simple windings which are not easy to overlap and cross.

The stator according to the embodiments of the present disclosure includes: a stator core including an annular stator yoke, and a plurality of stator teeth inwardly extending from the stator yoke and distributed at an interval along a circumferential direction of the stator yoke, a stator slot being defined between adjacent stator teeth of the plurality of stator teeth; an upper insulating frame including an upper plug-in portion, and an upper protruding portion protruding from an upper end of the stator core, wherein an outer peripheral wall of the upper protruding portion has a plurality of terminal slots and a plurality of protrusions, the plurality of terminal slots being respectively and adjacently arranged along a circumferential direction of the upper insulating frame, and the plurality of protrusions being arranged in a plurality of layers spaced apart from each other along an axial direction of the upper insulating frame, wherein a wiring space is defined between adjacent layers of the plurality of layers, wherein the protrusions in the same layer are distributed at an interval along the circumferential direction of the upper insulating frame, and wherein an upper end surface of the upper protruding portion has a plurality of notches defined thereon and downwardly recessed with different depths, the plurality of notches being arranged at an interval along the circumferential direction of the upper insulating frame; a lower insulating frame comprising a lower plug-in portion, and a lower protruding portion protruding from a lower end of the stator core along an axial direction of the stator core, wherein the plurality of stator teeth and the stator yoke are covered by the upper plug-in portion and the lower plug-in portion; a plurality of windings wound, via the upper plug-in portion and the lower plug-in portion, on the plurality of stator teeth, respectively, wherein each of the plurality of windings have a start end and a terminal end, wherein the plurality of windings are connected nose-to-tail by connecting wires to form a triangular series, and wherein the start ends, the terminal ends, and the connecting wires are respectively drawn out from the plurality of notches and disposed in the wiring space along the circumferential direction of the upper insulating frame to avoid mutual crossing and overlapping; and a plurality of connection terminals respectively inserted and connected in the plurality of terminal slots.

In the stator according to the embodiments of the present disclosure, since the terminal slot is disposed on the outer peripheral wall of the upper protruding portion and the connection terminal is inserted into the terminal slot, the connection terminal is easy to install and also simple in structure, and the connection is reliable. Moreover, by arranging notches of different depths and protrusion layers at different heights on the upper protrusion portion, the connecting wires, the start ends and the terminal ends of the windings can be easily drawn out and arranged in wiring spaces at different heights, along the circumferential direction of the upper protrusion portion. Therefore, overlapping and crossing can be avoided, and the outer skin of the windings are protected from being damaged, improving the safety. In addition, the number of turns of the windings can be greater, and the wiring process and structure are simple. The windings do not interfere with each other, and the performance of the motor is improved.

In some embodiments, the stator further includes a terminal support base. The plurality of connection terminals are mounted on the terminal support base, and each of the plurality of connection terminals have a lower end protruding from the terminal support base to be inserted and connected in a corresponding one of the plurality of terminal slots.

In some embodiments, a terminal hook is disposed on an outer side of each of the plurality of terminal slots, and the terminal hook is configured to hook the start end and the terminal end.

In some embodiments, the plurality of notches comprise a plurality of first notches, a plurality of second notches, and a plurality of third notches, a depth of the plurality of first notches being smaller than a depth of the plurality of second notches, and the depth of the plurality of second notches being smaller than a depth of the plurality of third notches.

In some embodiments, the plurality of third notches have a greater width in the circumferential direction of the upper insulating frame than the plurality of second notches.

In some embodiments, the plurality of protrusions comprise a plurality of first protrusions, a plurality of second protrusions, a plurality of third protrusions, and a plurality of fourth protrusions. The plurality of first protrusions are distributed at an interval along the circumferential direction of the upper insulating frame and defines a first layer together with the plurality of second protrusions distributed at an interval along the circumferential direction of the upper insulating frame. The plurality of third protrusions are distributed at an interval along the circumferential direction of the upper insulating frame and defines a second layer together with the plurality of second protrusions. The plurality of fourth protrusions are distributed at an interval along the circumferential direction of the upper insulating frame and defines a third layer together with the plurality of third protrusions. The first layer to the fourth layer are distributed respectively and at an interval from top to bottom along the axial direction of the upper insulating frame

In some embodiments, the plurality of first protrusions are close to an upper edge of the upper protruding portion. The plurality of second protrusions are close to bottom walls of the plurality of first notches. The plurality of third protrusions are close to bottom walls of the plurality of second notches. The plurality of fourth protrusions are close to bottom walls of the plurality of third notches in the axial direction of the upper insulating frame.

In some embodiments, a distance between the plurality of third protrusions and the plurality of fourth protrusions in the axial direction of the upper insulating frame is greater than a distance between the plurality of first protrusions and the plurality of fourth protrusions in the axial direction of the upper insulating frame and greater than a distance between the plurality of second protrusions and the plurality of third protrusions in the axial direction of the upper insulating frame.

In some embodiments, the plurality of fourth protrusions have a greater length in the circumferential direction of the upper insulating frame than any one of the plurality of first protrusions, the plurality of second protrusions, and the plurality of third protrusions.

The embodiments of the present disclosure further provide a motor having the above-mentioned stator. The motor includes a stator and a rotor.

In some embodiments, a ratio of the number of stator slots to the number of poles of the rotor is 3/2.

In some embodiments, the number of stator slots is 6, and the number of poles of the rotor is 4. The plurality of windings comprise from a first winding to a sixth winding. The plurality of connection terminals comprise a U-phase terminal, a V-phase terminal, and a W-phase terminal. A start end of the first winding and a terminal end of the sixth winding are connected to the V-phase terminal. A start end of the fifth winding and a terminal end of the fourth winding are connected to the W-phase terminal. A start end of the third winding and a terminal end of the second winding are connected to the U-phase terminal.

A terminal end of the third winding is connected to a start end of the sixth winding through a connecting wire. A terminal end of the fifth winding is connected to a start end of the second winding through the connecting wire. A terminal end of the first winding is connected to a start end of the fourth winding through the connecting wire.

In some embodiments, the number of stator slots is 9, and the number of poles of the rotor is 6. The plurality of windings comprise from a first winding to a ninth winding. The plurality of connection terminals comprise a U-phase terminal, a V-phase terminal, and a W-phase terminal. A start end of the first winding and a terminal end of the ninth winding are connected to the V-phase terminal. A start end of the eighth winding and a terminal end of the seventh winding are connected to the W-phase terminal. A start end of the third winding and a terminal end of the second winding are connected to the U-phase terminal. A terminal end of the third winding is connected to a start end of the sixth winding through the connecting wire. A terminal end of the sixth winding is connected to a start end of the ninth winding through the connecting wire.

A terminal end of the eighth winding is connected to a start end of the fifth winding through the connecting wire. A terminal end of the fifth winding is connected to a start end of the second winding through the connecting wire.

A terminal end of the first winding is connected to a start end of the fourth winding through the connecting wire. A terminal end of the fourth winding is connected to a start end of the seventh winding through the connecting wire.

In some embodiments, the number of stator slots is 12, and the number of poles of the rotor is 8. The plurality of windings comprise from a first winding to a twelfth winding. The plurality of connection terminals comprise a U-phase terminal, a V-phase terminal, and a W-phase terminal. A start end of the first winding and a terminal end of the twelfth winding are connected to the V-phase terminal. A start end of the eleventh winding and a terminal end of the tenth winding are connected to the W-phase terminal. A start end of the third winding and a terminal end of the second winding are connected to the U-phase terminal.

A terminal end of the third winding is connected to a start end of the sixth winding through the connecting wire. A terminal end of the sixth winding is connected to a start end of the ninth winding through the connecting wire. A terminal end of the ninth winding is connected to a start end of the twelfth winding through the connecting wire.

A terminal end of the eleventh winding is connected to a start end of the eighth winding through the connecting wire. A terminal end of the eighth winding is connected to a start end of the fifth winding through the connecting wire. A terminal end of the fifth winding is connected to a start end of the second winding through the connecting wire.

A terminal end of the first winding is connected to a start end of the fourth winding through the connecting wire. A terminal end of the fourth winding is connected to a start end of the seventh winding through the connecting wire. A terminal end of the seventh winding is connected to a start end of the tenth winding through the connecting wire.

A fluid pump having the above-mentioned motor is according to the embodiments of the present disclosure.

In some embodiments, the fluid pump is an electronic water pump or an electronic oil pump.

The embodiments of the present disclosure further provide a vehicle having the above-mentioned fluid pump.

### BRIEF DESCRIPTION OF DRAWINGS

FIG. 1 is a schematic perspective view of a stator according to an embodiment of the present disclosure.
FIG. 2 is a front view of the stator shown in FIG. 1.
FIG. 3 is a schematic perspective view of an upper insulating frame of a stator according to an embodiment of the present disclosure.
FIG. 4 is another schematic perspective view of the upper insulating frame shown in FIG. 3.
FIG. 5 is a plan view of the upper insulating frame shown in FIG. 3.
FIG. 6 is a radial cross-sectional view of a stator core according to an embodiment of the present disclosure.
FIG. 7 is a schematic diagram illustrating a wiring of windings of a stator with six slots and four 4 poles according to an embodiment of the present disclosure.
FIG. 8 is a schematic diagram illustrating a wiring of windings of a stator with nine slots and six poles according to an embodiment of the present disclosure.
FIG. 9 is a schematic diagram illustrating a wiring of windings of a stator with twelve slots and eight poles according to an embodiment of the present disclosure.

### Reference Signs:

stator 1; stator core 11, stator yoke 111, stator teeth 112, stator slot 113, marking slot 114; upper insulating frame 12, upper plug-in portion 121, upper protruding portion 122, terminal slot 1221, notch 1222, protrusion 1223, separating column 1224; first notch 12221, second notch 12222, third notch 12223, terminal hook 12224, first protrusion 12231, second protrusion 12232, third protrusion 12233, fourth protrusion 12234; lower insulating frame 13, lower plug-in portion 131, lower protruding portion 132; winding 14, start end 1401, terminal end 1402, first winding 1403, second winding 1404, third winding 1405, fourth winding 1406, fifth winding 1407, sixth winding 1408, seventh winding 1409, eighth winding 1410, ninth winding 1411, tenth winding 1412, eleventh winding 1413, twelfth winding 1414; connecting wire 15; connection terminal 16, U-phase terminal 161, V-phase terminal 162, W-phase terminal 163, ground terminal 164; terminal support base 17.

### DESCRIPTION OF EMBODIMENTS

Embodiments of the present disclosure are described in detail below, examples of which are illustrated in the accompanying drawings. The embodiments described below with reference to the accompanying drawings are illustrative, and they are intended to be used to explain the present disclosure, rather than being construed as limitations of the present disclosure.

In the specification, it is to be understood that terms such as "central," "longitudinal," "lateral," "length," "width," "thickness," "upper," "lower," "front," "rear," "left," "right," "vertical," "horizontal," "top," "bottom," "inner," "outer," "axial," "radial," "circumferential direction," "clockwise," and "counterclockwise" should be construed to refer to the orientation or direction as illustrated in the drawings, and they are only for the convenience of description and simplifying the description, rather than indicating or implying that the indicated apparatuses or elements must have a specific orientation, be constructed and operate in a specific orientation, and therefore should not be construed as a limitation on the present disclosure..

In addition, terms such as "first" and "second" are used herein for purposes of description and are not intended to indicate or imply relative importance or significance or to imply the number of indicated technical features. Thus, the feature defined with "first" and "second" may comprise at least one of the features. In the description of the present disclosure, "a plurality of" means at least two, for example, two, three, etc., unless specified otherwise.

In the description of the present disclosure, it should be noted that, unless otherwise clearly specified and limited, terms such as "mounted," "connected to", "coupled with", "fixed to" and the like should be understood in a broad sense. For example, it may be a fixed connection or a detachable connection or connection as one piece; mechanical connection or electrical connection; direct connection or indirect connection through an intermediate; internal communication of two components or the interaction relationship between two components, unless otherwise clearly limited. For those of ordinary skill in the art, the specific meaning of the above-mentioned terms in the present disclosure can be understood according to specific circumstances.

In the present disclosure, unless expressly stipulated and defined otherwise, the first feature "on" or "under" the second feature may include the scenarios that the first feature is in direct contact with the second feature, or the first and second features, instead of being in direct contact with each other, are in contact with each other through another feature therebetween. Moreover, a first feature "on," "above," or "on top of" a second feature may include the embodiments in which the first feature is right or obliquely "on," "above," or "on top of" the second feature, or it means that the first feature is located at a height higher than that of the second feature. In contrast, a first feature "below," "under," or "on bottom of" a second feature may include the embodiments in which the first feature is right or obliquely "below," "under," or "on bottom of" the second feature, or it means that the first feature is located at a height lower than that of the second feature.

Reference throughout this specification to "an embodiment," "some embodiments," "an example," "specific examples" or "some examples" means that a particular feature, structure, material, or characteristic described in connection with the embodiment or example is included in at least one embodiment or example of the present disclosure. Thus, the appearances of the above phrases throughout the specification are not necessarily referring to the same embodiment or example of the present disclosure. Furthermore, the particular features, structures, materials, or characteristics may be combined in any suitable manner in one or more embodiments or examples. Furthermore, those skilled in the art may combine and assemble the different embodiments or examples described in the specification as well as the features of the different embodiments or examples, without conflicting each other.

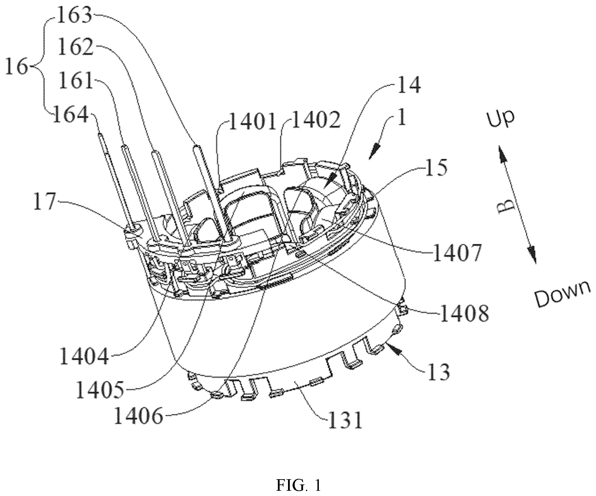

As illustrated in FIG. 1 to FIG. 6, a stator 1 according an embodiment of the present disclosure includes a stator core 11, an upper insulating frame 12, a lower insulating frame 13, a plurality of windings 14, and a plurality of connection terminals 16.

The stator core 11 includes an annular stator yoke 111, and a plurality of stator teeth 112 inwardly extending from the stator yoke 111 and distributed at an interval along a circumferential direction of the stator yoke 111. A stator slot 113 is defined between adjacent stator teeth 113.

The upper insulating frame 12 includes an upper plug-in portion 121 and an upper protruding portion 122. The upper protruding portion 122 protrudes from an upper end of the stator core 11 (in an upward direction, as indicated by the arrow B in FIG. 1). An outer peripheral wall of the protruding portion 122 has a plurality of terminal slots 1221 respectively and adjacently arranged along a circumferential direction of the upper insulating frame 12. The upper end surface of the upper protruding portion 122 has a plurality of notches 1222 defined thereon. The plurality of notches 1222 is recessed downwardly with different depths. The plurality of notches 1222 is arranged at an interval along the circumferential direction of the upper insulating frame 12. The upper protruding portion 122 has a plurality of protrusions 1223 provided on the outer peripheral wall of the upper protruding portion 122. The plurality of protrusions 1223 is arranged at a plurality of layers spaced apart from each other along an axial direction of the upper insulating frame 12. A wiring space is formed between adjacent layers. The protrusions 1223 located in the same layer are distributed at an interval along the circumferential direction of the upper insulating frame 12. The plurality of connection terminals 16 is inserted into the plurality of terminal slots 1221, respectively.

The lower insulating frame 13 includes a lower plug-in portion 131 and a lower protruding portion 132. The lower protruding portion 132 protrudes from a lower end of the stator core 11 along an axial direction of the stator core 11. The upper plug-in portion 121 and the lower plug-in portion 131 cover the stator teeth 111 and the stator yoke 112.

The plurality of windings 14 is wound, via the upper plug-in portion 121 and the lower plug-in portion, on the plurality of stator teeth 111. The winding 14 has a start end 1401 and a terminal end 1402. The plurality of windings 14 is connected nose-to-tail through connecting wires 15 to form a triangle series. The start ends 1401, the terminal ends 1402, and the connecting wires 15 are drawn out from the notches 1222 and arranged in the wire space along the circumference of the upper insulating frame 12, and thus they will not to cross and overlap each other.

In the stator according to the embodiments of the present disclosure, multiple slots for the connection terminals 16 are provided on the outer peripheral wall of the upper protruding portion 122. The plurality of connection terminals 16 is inserted and connected in the plurality of terminal slots 1221, which facilitates the installation of the connection terminals 16. The terminal slots 1221 can fix the positions of the connection terminals 16 to increase the stability of the connection between the connection terminals 16 and the windings 14 and to prevent the connection terminals 16 from being deformed. In this way, the connection between the connection terminals 16 and the windings 14 can be stabilized. Moreover, by providing the notches 1222 of different depths and protrusion layers at different heights on the upper protrusion portion 122, the connecting wires 15, the start ends 1401 and the terminal ends 1402 of the windings 14 can be easily drawn out and arranged in wiring spaces at different heights along the circumferential direction of the upper protrusion portion 122. Therefore, the overlapping and crossing of the connecting wires 15 can be avoided during the winding. The number of turns of the windings 14 can be greater, and the wiring process and structure can be simplified. In addition, the windings do not interfere with each other, and thus the performance of the motor can be improved.

The stator 1 according to the embodiments of the present disclosure further includes a terminal support base 17. A plurality of connection terminals 15 is mounted on the terminal support base 17. A lower end of the connection terminal 16 protrudes from the terminal support base 17 to be inserted and connected in the terminal slot 1221. By means of the cooperation between the terminal slot 1221 and the terminal support base 17, the stability of the connection between the connection terminal 16 and the winding 14 is enhanced, while the position and the deflection of the connection terminal 16 are maintained.

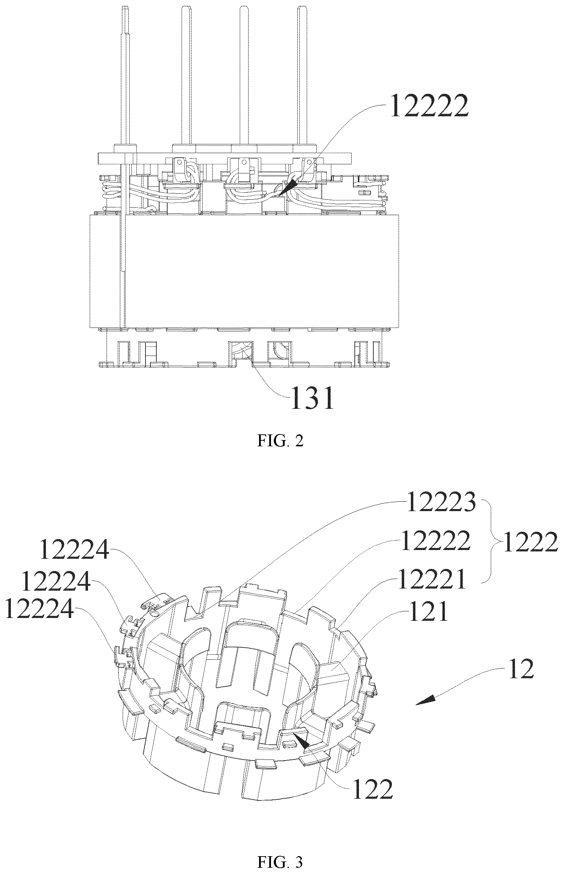

In some embodiments, as illustrated in FIG. 2 and FIG. 3, a terminal hook 12224 for hooking the start end 1401 and the terminal end 1402 is disposed on an outer side of the terminal slot 1221. The terminal hook 12224 is configured to fix the connecting wire 15 of the winding 14, and the winding 14 is connected to the connection terminal 15 through the terminal hook 12224.

Specifically, the notches 1222 include a plurality of first notches 12221, a plurality of second notches 12222, and a plurality of third notches 12223. A depth of the first notch 12221 is smaller than that of the second notch 12222, and a depth of the second notch 12222 is smaller than that of the third notch 12223. By means of the first notch 12221, the second notch 12222 and the third notch 12223 of different depths, the height of the connecting wire 15 of the winding 14 in the axial direction of the upper insulating frame 12 can be controlled. Thus, the connecting wires 15 of the respective windings 14 form layers in the axial direction of the upper insulating frame 12.

By providing the first notch 12221, the second notch 12222 and the third notch 12223 of three different depths, after the start end 1401 and the terminal end 1402 of the winding 14 are drawn out from the first notch 12221, the second notch 12222 and the third notch 12223, winding paths at different heights can be naturally formed on the outer peripheral wall of the upper protruding portion 122 to avoid overlapping and crossing of the connecting wires 15 during the winding process.

By providing the notches 1222 of different depths and the protrusion 1223 at different heights on the upper protrusion portion 122, wiring spaces at different heights can be defined on the outer circumferential direction of the upper protrusion 122. The connecting wires 15, the start ends 1401 and the terminal ends 1402 of the windings 14 can be easily drawn out and arranged in the wiring spaces at different heights along the circumferential direction of the upper protrusion portion 122, and thus the overlapping and crossing thereof can be avoided. The number of turns of the windings 14 can be greater, and the wiring process and structure can be simplified, and the windings do not interfere with each other. Therefore, the performance of the motor can be improved.

In some embodiments, the third notch 12223 has a greater width in the circumferential direction of the upper insulating frame 12 than the second notch 12222.

As shown in FIG. 1 to FIG. 3, the protrusions 1223 include a plurality of first protrusions 12231, a plurality of second protrusions 12232, a plurality of third protrusions 12233, and a plurality of fourth protrusions 12234. The plurality of first protrusions 12231 is distributed at an interval along the circumferential direction of the upper insulating frame 12 and defines a first layer together with the plurality of second protrusions 12232 distributed at an interval along the circumferential direction of the upper insulating frame 12. The plurality of third protrusions 12233 is distributed at an interval along the circumferential direction of the upper insulating frame 12 and defines a second layer together with the plurality of second protrusions 12232. The plurality of fourth protrusions 12234 is distributed at an interval along the circumferential direction of the upper insulating frame 12 and defines a third layer together with the third protrusions 12233. The first to fourth layers are distributed in sequence and at an interval from top to bottom along the axial direction of the upper insulating frame. Through the cooperation of the first protrusion 12231, the second protrusion 12232, the third protrusion 12233, and the fourth protrusion 12234 with the notches 1222 of different depth, the wiring space is divided into three layers to separate the connecting wires 15 from each other.

In some embodiments, the first protrusion 12231 is adjacent to an upper edge of the upper protruding portion 122; the second protrusion 12232 is adjacent to a bottom wall of the first notch 12221; the third protrusion 12233 is adjacent to a bottom wall of the second notch 12222; and the four protrusion 12234 is adjacent to a bottom wall of the third notch 12223 in the axial direction of the upper insulating frame 12. When the connecting wires 15 of the windings 14 are drawn out of the upper insulating frame 12 from the respective notches 1222 and enter the wiring space, the first protrusion 12231, the second protrusion 12232, the third protrusion 12233, and the fourth protrusion 12234 can cooperate with each other to confine the connecting wires 15 of the respective windings 14 in the respective layers of the wiring space and prevent the connecting wires 15 of each layer from overlapping and crossing.

In some embodiments, a distance between the third protrusion 12233 and the fourth protrusion 12234 in the axial direction of the upper insulating frame 12 is greater than a distance between the first protrusion 12231 and the second protrusion 12232 in the axial direction of the upper insulating frame 12 and is greater than a distance between the second protrusion 12232 and the third protrusion 12233 in the axial direction of the upper insulating frame 12. When two sets of connecting wires 15 are connected to the same phase terminal 16, the two sets of connecting wires 15 connected to the same phase terminal 16 can be both located in the third layer of the wiring space. Since the wiring space at the third layer is larger than that at the first layer and at the second layer, the two sets of connecting wires 15 in the third layer of the wiring space can be separated from each other. In some embodiments, an additional protrusion may be added in the third layer of the wiring space, to separate the connecting wires 15 located in the third layer of the wiring space from each other.

In some embodiments, the fourth protrusion 12234 has a length in the circumferential direction of the upper insulating frame 12 greater than any one of the first protrusion 12231, the second protrusion 12232, and the third protrusion 12233.

A stator according to a specific example of the present disclosure is described below.

As shown in FIG. 1 to FIG. 6, a stator 1 according to the embodiment of the present disclosure includes a stator core 11, an upper insulating frame 12, a lower insulating frame 13, six windings 14, and four connecting terminals 16.

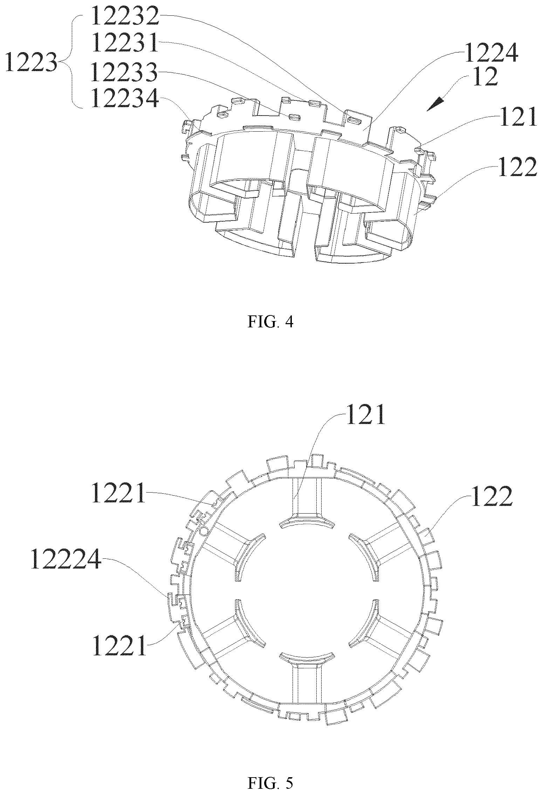

The stator core 11 includes six annular stator yokes 111, six stator teeth 112 inwardly extending from the six stator yokes 111 and distributed at an interval along a circumferential direction of the stator yokes 111. As illustrated in FIG. 5, in this embodiment, there are 6 stator teeth. The stator tooth close to a V-phase terminal is a first tooth, or the stator tooth located between a V-phase terminal and a U-phase terminal is the first tooth; and along the clockwise direction, a second tooth, a third tooth, a fourth tooth, a fifth tooth, and a sixth tooth are sequentially arranged. Six stator slots 113 are defined between the six stator teeth 112, and a marking slot 114 is provided on an outer circumference of the stator core 11.

The upper insulating frame 12 includes an upper plug-in portion 121 and an upper protruding portion 122. The upper protruding portion 122 protrudes from an upper end of the stator core 11. A plurality of terminal slots 1221 is sequentially and adjacently arranged on an upper end surface of the upper protruding portion 122 along a circumferential direction of the upper insulting frame 12. The upper end surface of the upper protruding portion 122 (i.e., an upper end surface in the direction shown in FIG. 1) has three first notches 12221 recessed downwardly, five second notches 12222 recessed downwardly, and three third notches 12223 recessed downwardly. The first notches 12221, the second notches 12222 and the third notches 12223 are disposed at an interval along the circumferential direction of the upper insulating frame 12. The first notch 12221, the second notch 12222, and the third notch 12223 penetrates the upper protruding portion 122 in a radial direction of the upper insulating frame 12. These eleven notches form eleven separating columns 1224 in the circumferential direction of the upper protruding portion 122. A depth of the third notch 12223 (the depth is a downward extending length of the notch) is greater than a depth of the second notch 12222 and is greater than a depth of the first notch 12221. The upper protruding portion 122 has a plurality of first protrusions 12231, a plurality of second protrusions 12232, a plurality of third protrusions 12233, and a plurality of fourth protrusions 12234 disposed on an outer peripheral wall thereof. The first protrusions, the second protrusions, the third protrusions, and the fourth protrusions can be arranged according to the actual winding needs. The plurality of first protrusions 12231 is distributed at an interval along the circumferential direction of the upper insulating frame and defines a first layer together with the plurality of second protrusions 12232 distributed at an interval along the circumferential direction of the upper insulating frame. The plurality of third protrusions 12233 is distributed at an interval along the circumferential direction of the upper insulating frame 12 and defines a second layer together with the second protrusions 12232. The plurality of fourth protrusions 12234 is distributed at an interval along the circumferential direction of the upper insulating frame 12 and defines a third layer together with the third protrusions 12233. The first to fourth layers are disposed in sequence and at an interval from top to bottom along an axial direction of the upper insulating frame. The outer peripheral wall of the upper protruding portion 122 has six terminal slots 1221 sequentially and adjacently arranged along the circumferential direction of the upper insulating frame 12 and a terminal support base 17. The six terminal slots 1221 respectively correspond to a first lead terminal and a second lead terminal of two U-phase terminals 161, a first lead terminal and a second lead terminal of the V-phase terminal 162, and a first lead terminal and a second lead terminal of the W-phase terminal 163. The terminal support base 17 has through holes defined thereon, through which the connection terminal 15 can pass. The U-phase terminal 161, the V-phase terminal 162 and the W-phase terminal 163 pass through the through holes of the terminal support base 17 and are fitted with the six terminal slots 1221, and a ground terminal 164 is connected to ground through the through hole of the terminal support base 17.

The lower insulating frame 13 includes a lower plug-in portion 131 and a lower protruding portion 132. The lower protruding portion 132 protrudes from a lower end of the stator core 11 along an axial direction of the stator core 11. The upper plug-in portion 121 and the lower plug-in portion 131 are inserted into and connected to each other and cover the stator teeth 112 and the stator yoke 111.

The six windings 14 are spaced apart from the upper plug-in portion 121 and the lower plug-in portion 131, and they are respectively wound on the six stator teeth 111. Each winding 14 has a start end 1401 and a terminal end 1402. A plurality of windings 14 are connected by connecting wires 15 to form a triangular series. The start ends 1401, the terminal ends 1402, and the connecting wires 15 are respectively drawn out from the notches 1222 and arranged in a wiring space along the circumferential direction of the upper insulating frame 12.

The wiring mode of the stator according to the embodiment of the present disclosure is briefly described below.

The first lead terminal of the V-phase terminal 162 (an VI end of the V-phase terminal) is connected to the connecting wire 15 through the terminal hook 12224. The connecting wire 15 is connected to the start end 1401 of the first winding 1403 at the second notch 12222 close to the start end 1401 of the first winding 1403. The terminal end 1402 of the first winding 1403 is drawn out of the upper insulating frame 12 from the third notch 12223 close to the terminal end 1402 of the first winding 1403 and is connected to the connecting wire 15. The connecting wire 15, attached to the outer peripheral wall of the upper protruding portion 122 and the upper surface of the fourth protrusion 12234, bypasses the first winding 1404 and the third winding 1405, and the connecting wire 15, attached to the outer peripheral wall of the upper protruding portion 122 and the lower surface of the third protrusion 12233, is wound to the third notch 12223 close to the start end 1401 of the fourth winding 1406 and is connected to the start end 1401 of the fourth winding 1406. Then, the terminal end 1402 of the fourth winding 1406 is drawn out of the upper insulating frame 12 from the third notch 12223 close to the fourth winding 1406 and is connected to the connecting wire 15. The connecting wire 15, attached to the outer peripheral wall of the upper protruding portion 122 and the upper surface of the fourth protrusion 12234, bypasses the fifth winding 1407 and the sixth winding 1408, when the connecting wire 15 reaches the W-phase terminal 163, the connecting wire 15 is connected to the second lead terminal (an W2 end of the W-phase terminal) of the W-phase terminal 163 through the terminal hook 12224.

The first lead terminal of the U-phase terminal 161 (an U1 end of the U-phase terminal) is connected to the connecting wire 15 through the terminal hook 12224. The connecting wire 15, attached to the outer peripheral wall of the upper protruding portion 122 and the lower surface of the first protrusion 12231, is wound to the second notch 12223 close to the terminal end 1402 of the first winding 1404 and is connected to the terminal end 1402 of the first winding 1404. The start end 1401 of the first winding 1404 is drawn out of the upper insulating frame 12 from the second notch 12223 close to the start end 1401 of the first winding 1404 and is connected to the connecting wire 15. When the connecting wire 15 is attached to the outer peripheral wall of the upper protruding portion 122 and the upper surface of the third protrusion 12233 and is wound to the next second protrusion (the second protrusion adjacent to the third protrusion in the winding direction), the connecting wire 15 is attached to the lower surface of the second protrusion 12232 and further bypasses the third winding 1405 and the fourth winding 1406 along the outer peripheral wall of the upper protruding portion 122. Then, the connecting wire 15, attached to the outer peripheral wall of the upper protrusion 122, is wound to the second notch 12222 close to the terminal end 1402 of the fifth winding 1407 and is connected to the terminal end 1402 of the fifth winding 1407. The start end 1401 of the fifth winding 1407 is drawn out of the upper insulating frame 12 from the second notch 12222 close to the start end 1401 of the fifth winding 1407 and is connected to the connecting wire 15. When the connecting wire 15 is attached the outer peripheral wall of the upper protruding portion 122 and the lower surface of the third protrusion 12233 and is wound to the next second protrusion 12232, the connecting wire 15 is attached to the lower surface of the second protrusion 12232 and is further wound along the outer peripheral wall of the upper protruding portion 122 to the W-phase terminal 163, and the connecting wire 15 is connected to the first lead terminal of the W-phase terminal 163 (a Wl end of the W-phase terminal) through the terminal hook 12224.

The second lead terminal of the V-phase terminal 162 (a V2 end of the V-phase terminal) is connected to the connecting wire 15 through the terminal hook 12224. The connecting wire 15 is connected to the terminal end 1402 of the winding 1408 at the second notch close the terminal end 1402 of the sixth winding 1408. The start end 1401 of the sixth winding 1408 is drawn out of the upper insulating frame 12 from the first notch 12221 close to the starting end 1401 of the sixth winding 1408 and is connected to the connecting wire 15. The connecting wire 15, attached to the outer peripheral wall of the protruding portion 122 and the lower surface of the first protrusion 12231, bypasses the fifth winding 1407 and the fourth winding 1406, and the connecting wire 15 is connected to the terminal end 1402 of the third winding 1405 at the first notch 12221 close to the terminal end 1402 of the third winding 1405. The start end 1401 of the third winding 1405 is drawn out of the upper insulating frame 12 from the first notch 12221 close to the start end 1401 of the third winding 1405 and is connected to the connecting wire 15. The connecting wire 15, attached to the outer peripheral wall of the upper protruding portion 122 and the lower surface of the first protrusion 12231, is wound to the U-phase terminal 161, and the connecting wire 15 is connected to the second lead terminal (a U2 end of the U-phase terminal) of the U-phase terminal 161 through the terminal hook 12224.

A motor according to an embodiment of the present disclosure includes a rotor and the stator according to the above-described embodiments.

In some embodiments, a ratio of the number of stator slots to the number of poles of the rotor is 3/2.

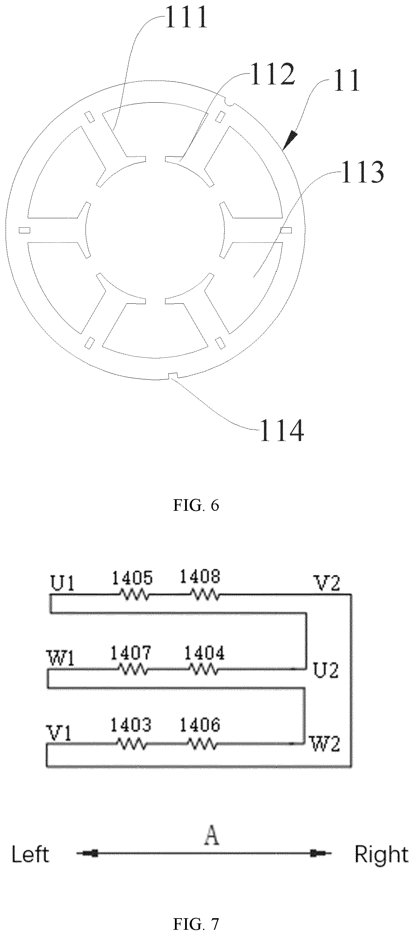

As shown in FIG. 7, in some embodiments, the number of stator slots is 6, the number of poles of the rotor is 4. The windings include a first winding to a sixth winding. The connection terminals include a U-phase terminal, a V-phase terminal, and a W-phase terminal. A start end 1401 of the first winding 1403 and a terminal end 1402 of the sixth winding 1408 are connected to the V-phase terminal (as shown in FIG. 7, the left end of the winding is the start end, and the right end is the terminal end). A start end 1401 of the fifth winding 1407 and a terminal end 1402 of the fourth winding 1406 are connected to the W-phase terminal. A start end 1401 of the third winding 1405 and a terminal end 1402 of the first winding 1404 are connected to the U-phase terminal.

A terminal end 1402 of the third winding 1405 is connected to a start end 1401 of the sixth winding 1408 through the connecting wire. A terminal end 1402 of the fifth winding 1407 is connected to a start end 1401 of the first winding 1404 through the connecting wire. A terminal end of the first winding 1403 is connected to a start end 1401 of the fourth winding 1406 through the connecting wire.

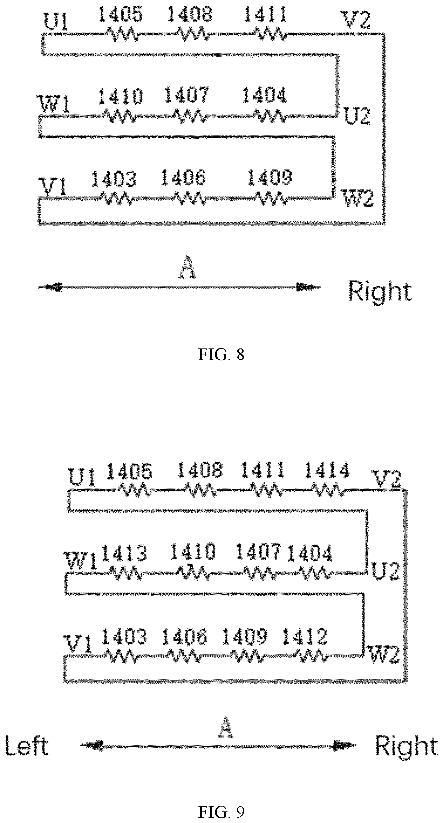

As shown in FIG. 8, in some embodiments, the number of stator slots is 9, the number of poles of the rotor is 6. The windings include a first winding to a ninth winding 1411. The connection terminals include a U-phase terminal, a V-phase terminal, and a W-phase terminal. A start end 1401 of the first winding 1403 and a terminal end 1402 of the ninth winding 1411 are connected to the V-phase terminal (as shown in FIG. 8, the left end of the winding is the start end, and the right end is the terminal end). A start end 1401 of the eighth winding 1410 and a terminal end 1402 of the seventh winding 1409 are connected to the W-phase terminal. A start end 1401 of the third winding 1405 and a terminal end 1402 of the first winding 1404 are connected to the U-phase terminal. A terminal end 1402 of the third winding 1405 is connected to a start end 1401 of the sixth winding 1408 through the connecting wire, and a terminal end 1402 of the sixth winding 1408 is connected to a start end 1401 of the ninth winding 1411 through the connecting wire.

A terminal end 1402 of the eighth winding 1410 is connected to a start end 1401 of the fifth winding 1407 through the connecting wire, and a terminal end 1402 of the fifth winding 1407 is connected to a start end 1401 of the first winding 1404 through the connecting wire.

A terminal end 1402 of the first winding 1403 is connected to a start end 1401 of the fourth winding 1406 through the connecting wire, and a terminal end 1402 of the fourth winding 1406 is connected to a start end 1401 of the seventh winding 1409 through the connecting wire.

As shown in FIG. 9, in some embodiments, the number of stator slots is 12, and the number of poles of the rotor is 8. The windings include a first winding to a twelfth winding 1414. The connection terminals include a U-phase terminal, a V-phase terminal, and a W-phase terminal. A start end 1401 of the first winding 1403 and a terminal end 1402 of the twelfth winding 1414 are connected to the V-phase terminal (as shown in FIG. 9, the left end of the winding is the start end, and the right end is the terminal end). A start end 1401 of the eleventh winding 1413 and a terminal end 1402 of the tenth winding 1412 are connected to the W-phase terminal. A start end 1401 of the third winding 1405 and a terminal end 1402 of the first winding 1404 are connected to the U-phase terminal.

A terminal end 1402 of the third winding 1405 is connected to a start end 1401 of the sixth winding 1408 through the connecting wire. A terminal end 1402 of the sixth winding 1408 is connected to a start end 1401 of the ninth winding 1411 through the connecting wire. A terminal end 1402 of the ninth winding 1411 is connected to a start end 1401 of the twelve winding through the connecting wire.

A terminal end 1402 of the eleventh winding 1413 is connected to a start end 1401 of the eighth winding 1410 through the connecting wire. A terminal end 1402 of the eighth winding 1410 is connected to a start end 1401 of the fifth winding 1407 through the connecting wire. A terminal end 1402 of the fifth winding 1407 is connected to a start end 1401 of the first winding 1404 through the connecting wire.

A terminal end 1402 of the first winding 1403 is connected to a start end 1401 of the fourth winding 1406 through the connecting wire. A terminal end 1402 of the fourth winding 1406 is connected to a start end 1401 of the seventh winding 1409 through the connecting wire. A terminal end 1402 of the seventh winding 1409 is connected to a start end 1401 of the tenth winding 1412 through the connecting wire.

In the motor according to the embodiments of the present disclosure, when the ratio of the number of stator slots to the number of poles of the rotor in the permanent magnet synchronous motor is 3/2, the air gap of the permanent magnet synchronous motor is very large, and the effective permanent magnet magnetic field of the permanent magnet synchronous motor is weak. The only way to reach the lift and efficiency required by the electronic water pump is to increase the number of coil turns. In order to improve production efficiency, the winding machine needs to run continuously without interruption during the winding. When the motor has a ratio of the number of stator slots to the number of poles of the rotor of 3/2, in order to avoid the crossing and overlapping during the winding in the motor, in the stator of the embodiments of the present disclosure, the connecting wire is connected to the start end 1401 and the terminal end 1402 of each coil of the motor. In this way, the winding wires neither overlap nor cross each other during the winding, and thus the performance of the motor can be improved.

The embodiments of the present disclosure further provide a fluid pump having the motor according to the above embodiments. For example, the fluid pump is an electronic water pump or an electronic oil pump.

The embodiments of the present disclosure further provide a vehicle having the fluid pump according to the above-mentioned embodiments.

For example, the vehicle may be a new energy vehicle, a fuel vehicle, etc. The new energy vehicle includes a pure electric vehicle, an extended-range electric vehicle, a hybrid vehicle, a fuel cell electric vehicle, a hydrogen engine vehicle, and the like.

Although embodiments of the present disclosure are described and illustrated as above, those skilled in the art can understand that the above embodiments are illustrative and should not be construed as limitations of the present disclosure. Those skilled in the art can make various changes, modifications, alternatives, and variations without departing from the scope of the present disclosure.

## Claims

1. A stator, comprising:
a stator core comprising an annular stator yoke and a plurality of stator teeth inwardly extending from the stator yoke and distributed at an interval along a circumferential direction of the stator yoke, wherein a stator slot being defined between adjacent stator teeth;
an upper insulating frame comprising an upper plug-in portion and an upper protruding portion protruding from an upper end of the stator core, wherein an outer peripheral wall of the upper protruding portion is provided with a plurality of terminal slots being respectively and adjacently arranged along a circumferential direction of the upper insulating frame, and wherein an upper end surface of the upper protruding portion is provided with a plurality of notches being downwardly recessed with different depths, wherein the plurality of notches being arranged at an interval along the circumferential direction of the upper insulating frame , and wherein the outer peripheral wall of the upper protruding portion is provided with a plurality of protrusions being arranged in a plurality of layers spaced apart from each other along an axial direction of the upper insulating frame, wherein a wiring space is defined between adjacent layers, wherein the protrusions in the same layer are distributed at an interval along the circumferential direction of the upper insulating frame;
a lower insulating frame comprising a lower plug-in portion and a lower protruding portion protruding from a lower end of the stator core along an axial direction of the stator core, wherein the stator teeth and the stator yoke are covered by the upper plug-in portion and the lower plug-in portion;
a plurality of windings wound via the upper plug-in portion and the lower plug-in portion onto the plurality of stator teeth, respectively, wherein the windings has a start end and a terminal end, wherein the plurality of windings are connected nose-to-tail by connecting wires to form a triangular series, and wherein the start ends, the terminal ends, and the connecting wires are respectively drawn out from the notches and disposed in the wiring space along the circumferential direction of the upper insulating frame to avoid mutual crossing and overlapping; and
a plurality of connection terminals respectively inserted and connected in the plurality of terminal slots.

2. The stator according to claim 1, further comprising:
a terminal support base,
wherein the plurality of connection terminals are mounted on the terminal support base, and wherein the connection terminals has a lower end protruding from the terminal support base to be inserted and connected in the terminal slots.

3. The stator according to claim 1, wherein a terminal hook is disposed on an outer side of the terminal slots, and wherein the terminal hook hooks the start end and the terminal end.

4. The stator according to any one of claims 1 to 3, wherein the notches comprise a plurality of first notches, a plurality of second notches, and a plurality of third notches, a depth of the first notches being smaller than a depth of the second notches, and the depth of the second notches being smaller than a depth of the third notches.

5. The stator according to claim 4, wherein the plurality of protrusions comprise a plurality of first protrusions, a plurality of second protrusions, a plurality of third protrusions, and a plurality of fourth protrusions,
wherein the plurality of first protrusions are distributed at an interval along the circumferential direction of the upper insulating frame and define a first layer together with the plurality of second protrusions distributed at an interval along the circumferential direction of the upper insulating frame,
wherein the plurality of third protrusions are distributed at an interval along the circumferential direction of the upper insulating frame and define a second layer together with the plurality of second protrusions, and
wherein the plurality of fourth protrusions are distributed at an interval along the circumferential direction of the upper insulating frame and define a third layer together with the plurality of third protrusions,
the first layer to the fourth layer being distributed respectively and at an interval from top to bottom along the axial direction of the upper insulating frame.

6. The stator according to claim 5, wherein the first protrusions is close to an upper edge of the upper protruding portion, wherein the second protrusions is close to a bottom wall of the first notches, wherein the plurality of third protrusions is close to a bottom wall of the second notches, and wherein the fourth protrusions is close to a bottom wall of the third notches in the axial direction of the upper insulating frame.

7. The stator according to claim 5, wherein a distance between the third protrusions and the fourth protrusions in the axial direction of the upper insulating frame is greater than a distance between the first protrusions and the fourth protrusions in the axial direction of the upper insulating frame and greater than a distance between the second protrusions and the third protrusions in the axial direction of the upper insulating frame.

8. The stator according to claim 5, wherein the fourth protrusions have a greater length in the circumferential direction of the upper insulating frame than any one of the first protrusions, the second protrusions, and the third protrusions.

9. A motor, comprising:
a stator according to any one of claims 1 to 8; and
a rotor,
wherein the stator and the rotor are spaced apart from each other in a radial direction of the stator.

10. The motor according to claim 9, wherein a ratio of a number of stator slots to a number of poles of the rotor is 3/2.

11. The motor according to claim 10, wherein the number of stator slots is 6 and the number of poles of the rotor is 4, wherein a windings comprise from a first winding to a sixth winding, and wherein a connection terminals comprise a U-phase terminal, a V-phase terminal, and a W-phase terminal,
wherein a start end of the first winding and a terminal end of the sixth winding being connected to the V-phase terminal, a start end of the fifth winding and a terminal end of the fourth winding being connected to the W-phase terminal, and a start end of the third winding and a terminal end of the second winding being connected to the U-phase terminal,
a terminal end of the third winding being connected to a start end of the sixth winding through a connecting wire, a terminal end of the fifth winding being connected to a start end of the second winding through the connecting wire, and a terminal end of the first winding being connected to a start end of the fourth winding through the connecting wire.

12. The motor according to claim 10, wherein the number of stator slots is 9 and the number of poles of the rotor is 6, wherein the windings comprise from a first winding to a ninth winding, and wherein the connection terminals comprise a U-phase terminal, a V-phase terminal, and a W-phase terminal,
a start end of the first winding and a terminal end of the ninth winding being connected to the V-phase terminal, a start end of the eighth winding and a terminal end of the seventh winding being connected to the W-phase terminal, and a start end of the third winding and a terminal end of the second winding being connected to the U-phase terminal,
a terminal end of the third winding being connected to a start end of the sixth winding through the connecting wire, a terminal end of the sixth winding being connected to a start end of the ninth winding through the connecting wire, a terminal end of the eighth winding being connected to a start end of the fifth winding through the connecting wire, a terminal end of the fifth winding being connected to a start end of the second winding through the connecting wire, a terminal end of the first winding being connected to a start end of the fourth winding through the connecting wire, and a terminal end of the fourth winding being connected to a start end of the seventh winding through the connecting wire.

13. The motor according to claim 10, wherein the number of stator slots is 12 and the number of poles of the rotor is 8, wherein the windings comprise from a first winding to a twelfth winding, wherein the connection terminals comprise a U-phase terminal, a V-phase terminal, and a W-phase terminal,
a start end of the first winding and a terminal end of the twelfth winding being connected to the V-phase terminal, a start end of the eleventh winding and a terminal end of the tenth winding being connected to the W-phase terminal, and a start end of the third winding and a terminal end of the second winding being connected to the U-phase terminal,
a terminal end of the third winding being connected to a start end of the sixth winding through the connecting wire, a terminal end of the sixth winding being connected to a start end of the ninth winding through the connecting wire, a terminal end of the ninth winding being connected to a start end of the twelfth winding through the connecting wire, a terminal end of the eleventh winding being connected to a start end of the eighth winding through the connecting wire, a terminal end of the eighth winding being connected to a start end of the fifth winding through the connecting wire, a terminal end of the fifth winding being connected to a start end of the second winding through the connecting wire, a terminal end of the first winding being connected to a start end of the fourth winding through the connecting wire, a terminal end of the fourth winding being connected to a start end of the seventh winding through the connecting wire, and a terminal end of the seventh winding being connected to a start end of the tenth winding through the connecting wire.

14. A fluid pump, comprising a motor according to any one of claims 9 to 13.

15. The fluid pump according to claim 14, wherein the fluid pump is an electronic water pump or an electronic oil pump.

16. A vehicle, comprising a fluid pump according to claim 14 or 15.
